(19) Europäisches Patentamt
European Patent Office
Office européen des brevets

(11) Veröffentlichungsnummer: **0 436 186 B1**

# (12) EUROPÄISCHE PATENTSCHRIFT

(45) Veröffentlichungstag der Patentschrift: **25.10.95**

(51) Int. Cl.6: **C08L 69/00**, C08L 51/04, //(C08L69/00,51:04),(C08L51/04, 69:00)

(21) Anmeldenummer: **90124860.9**

(22) Anmeldetag: **20.12.90**

Die Akte enthält technische Angaben, die nach dem Eingang der Anmeldung eingereicht wurden und die nicht in dieser Patentschrift enthalten sind.

## (54) Wärmeformbeständige, gut verarbeitbare und thermostabile Polycarbonat-Formmassen.

(30) Priorität: **05.01.90 DE 4000173**

(43) Veröffentlichungstag der Anmeldung:
**10.07.91 Patentblatt 91/28**

(45) Bekanntmachung des Hinweises auf die Patenterteilung:
**25.10.95 Patentblatt 95/43**

(84) Benannte Vertragsstaaten:
**BE DE ES FR GB IT NL**

(56) Entgegenhaltungen:
**EP-A- 396 958**
**EP-A- 401 629**
**EP-A- 403 837**
**EP-A- 410 239**
**EP-A- 0 107 015**
**EP-A- 0 362 646**
**US-A- 3 852 393**
**US-A- 4 243 764**

(73) Patentinhaber: **BAYER AG**

**D-51368 Leverkusen (DE)**

(72) Erfinder: **Wittmann, Dieter, Dr.**
**Wolfskaul 4**
**W-5000 Köln 80 (DE)**
Erfinder: **Eckel, Thomas, Dr.**
**Gneisenaustrasse 15a**
**W-4047 Dormagen 1 (DE)**
Erfinder: **Westeppe, Uwe, Dr.**
**Vogelskamp 72**
**W-4020 Mettmann (DE)**
Erfinder: **Ott, Karl-Heinz, Dr.**
**Paul-Klee-Strasse 54**
**W-5090 Leverkusen 1 (DE)**
Erfinder: **Peters, Horst, Dr.**
**Winterbergstrasse 25**
**W-5090 Leverkusen 3 (DE)**
Erfinder: **Schoeps, Jochen, Dr.**
**Windmühlenstrasse 126**
**W-4150 Krefeld 1 (DE)**

EP 0 436 186 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen mit hoher Wärmeformbeständigkeit, guter Verarbeitbarkeit und Thermostabilität aus aromatischen Polycarbonaten auf Basis von substituierten Dihydroxydiphenylcycloalkanen, über Massepolymerisation, Lösungspolymerisation oder Masse-Suspensions-Polymerisation hergestellten kautschukmodifizierten (Co)Polymerisaten, ein Verfahren zur Herstellung der Formmassen durch Mischen der Komponenten bei erhöhter Temperatur und ihre Verwendung zur Herstellung von Formkörpern.

Thermoplastische Formmassen aus Polycarbonaten und ABS-Polymerisaten sind seit langem bekannt. So beschreibt die DE 1 170 141 gut verarbeitbare Formmassen aus Polycarbonaten und Pfropfpolymerisaten von Monomermischungen aus Acrylnitril und einem aromatischen Vinylkohlenwasserstoff, beispielsweise Styrol, auf Polybutadien.

Die nach veröffentlichten EP-A- 362 646, EP-A- 396 958, EP-A- 401 629 und EP-A- 403 837 beschreiben Mischungen aus dem beanspruchten Polycarbonaten mit z.B. ABS. Die speziellen ABS-Typen des Anspruchs 1 werden jedoch nicht genannt.

Die Polycarbonat/ABS-Mischungen der EP-A- 410 239 enthalten zusätzlich Copolymerisate aus cyclischen Carbonaten und Lactonen.

Formmassen aus Polycarbonaten und über Masseverfahren hergestellten Polymerisaten, vorzugsweise vom ABS-Typ, sind z.B. aus der US 4 624 986 bekannt. Sie weisen neben guten Tieftemperatureigenschaften hohe Farbstabilität und eine matte Oberfläche auf.

Sowohl die Wärmeformbeständigkeit als auch die Thermostabilität der genannten Formmassen des Stands der Technik sind jedoch für eine Reihe von Anwendungen im KFZ-Bereich noch nicht ausreichend.

Insbesondere für KFZ-Außenteile erfordern Lackierbedingungen höhere Wärmestandfestigkeiten, und komplizierte Formteilgeometrien und kurze Zykluszeiten im Spritzguß bedingen häufig hohe Verarbeitungstemperaturen, die zu einer Schädigung des Materials führen können.

Überraschenderweise wurde nun gefunden, daß Formmassen mit hoher praktischer Wärmeformbeständigkeit und guter Verarbeitbarkeit und Thermostabilität dann erhalten werden, wenn man in Mischungen aus Polycarbonaten und kautschukmodifizierten Polymerisaten, die nach einem Masse- oder Lösungs- oder Masse-Suspensions-Verfahren hergestellt wurden, als Polycarbonatkomponente spezielle Polycarbonate auf Basis von substituierten Dihydroxydiphenylcycloalkanen einsetzt.

Gegenstand der vorliegenden Erfindung sind demzufolge Formmassen enthaltend:

A. 1 bis 99, vorzugsweise 25 bis 98, besonders bevorzugt 40 bis 97 Gew.-Teile, eines oder mehrerer thermoplastischer aromatischer Polycarbonate mit $M_w$ (Gewichtsmittelmolekulargewichten) von mindestens 10.000, vorzugsweise von 20.000 bis 300.000, die bifunktionelle Carbonatstruktureinheiten der Formel (I) enthalten,

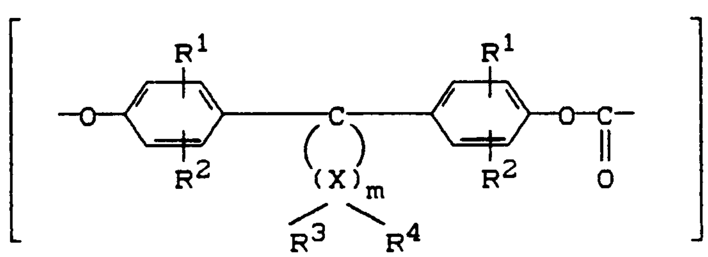

(I)

worin

- $R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, inbesondere Benzyl,
- m eine ganze Zahl von 4 bis 7, bevorzugt 4 oder 5,
- $R^3$ und $R^4$ für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X $R^3$ und $R^4$ gleichzeitig Alkyl bedeuten, und

B. 1 bis 99, vorzugsweise 2 bis 75, insbesondere 3 bis 60 Gew.-Teile eines Polymerisats, das erhalten wird durch Pfropfpolymerisation einer Mischung aus

B.1 50 bis 99, vorzugsweise 60 bis 95 Gew.-Teilen Styrol, α-Methylstyrol, kernsubstituierten Styrolen, $C_1$-$C_8$-Alkyl-methacrylaten, $C_1$-$C_8$-Alkylacrylaten oder Mischungen daraus, und

B.2 50 bis 1, vorzugsweise 40 bis 5 Gew.-Teilen Acrylnitril, Methacrylnitril, $C_1$-$C_8$-Alkylmethacrylaten,$C_1$-$C_8$-Alkylacrylaten, Maleinsäureanhydrid, N-substituierten Maleinimiden oder Mischungen daraus, wobei die Summe aus B.1 und B.2 100 Gew.-Teile ergeben soll, in Gegenwart von

B.3 1 bis 50, vorzugsweise 2 bis 35, inbesondere 3 bis 25 Gew.-Teilen, bezogen auf 100 Gew.-Teile aus B.1 und B.2, eines mit B.1 und B.2 copolymerisierbaren Kautschuks mit einer Glasübergangstemperatur <0 °C, vorzugsweise <-20 °C,

wobei das (Co)Polymerisat B. nach einem Masse- oder Lösungs- oder Masse-Suspensions-Polymerisationsverfahren hergestellt ist und die im Ansprüch 1 angegebenen Bedingungen erfüllt.

Komponente A

Polycarbonate A im Sinne der Erfindung sind hochmolekulare, thermoplastische, aromatische Polycarbonate mit $M_w$ (Gewichtsmittelmolekulargewichten) von mindestens 10.000, vorzugsweise von 20.000 bis 300.000, die bifunktionelle Carbonatstruktureinheiten der Formel (I) enthalten,

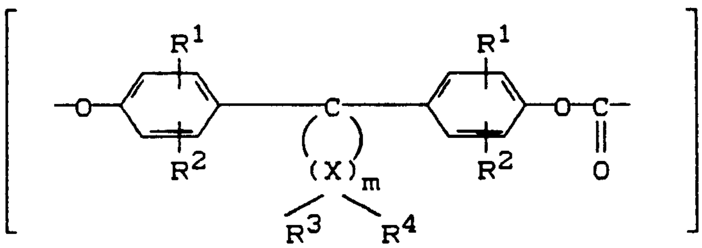

(I)

worin

R¹ und R² unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, inbesondere Benzyl,

m eine ganze Zahl von 4 bis 7, bevorzugt 4 oder 5,

R³ und R⁴ für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X R³ und R⁴ gleichzeitig Alkyl bedeuten.

Ausgangsprodukte für die Polycarbonate A sind Dihydroxydiphenylcycloalkane der Formel (Ia),

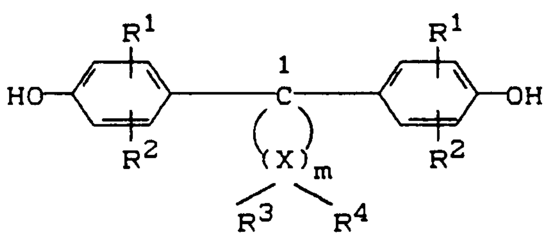

(Ia)

worin

X, $R^1$, $R^2$, $R^3$, $R^4$ und m für die Formel (I) genannte Bedeutung haben.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyldisubstitution in β-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel Ia), beispielsweise die Diphenole der Formeln Ib-Id,

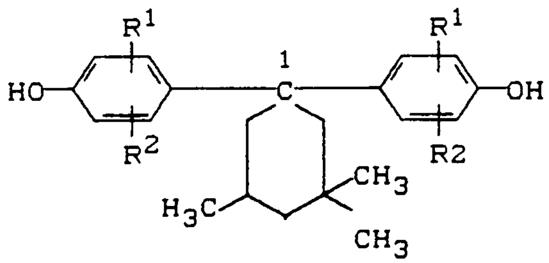

(Ib)

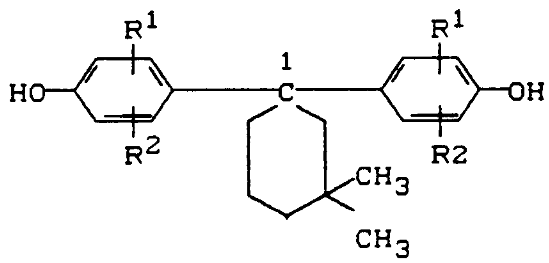

(Ic)

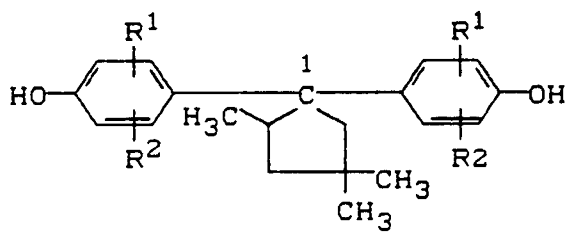

(Id)

wobei das 1,1-Bis-(4-hydroxyphenyl)-3,3,5-trimethylcyclohexan (Formel Ib mit $R^1$ und $R^2$ gleich H) besonders bevorzugt ist.

Die Polycarbonate A können gemäß der deutschen Patentanmeldung P 3 832 396.6 (LeA 26 344) aus Diphenolen der Formel (Ia) hergestellt werden.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit andere Diphenolen, beispielsweise mit den der Formel (Ie)

HO-Z-OH (Ie)

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele für Diphenole der Formel (Ie) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französichen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (Ie) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (Ia) zu den gegebenenfalls mitzuwendenden anderen Diphenolen der Formel (Ie), soll zwischen 100 Mol-% (Ia) zu 0 Mol-% (Ie) und 2 Mol-% (Ia) zu 98 Mol-% (Ie), vorzugsweise zwischen 100 Mol-% (Ia) zu 0 Mol-% (Ie) und 5 Mol-% (Ia) zu 95 Mol-% (Ie) und insbesondere zwischen 100 Mol-% (Ia) zu 0 Mol-% (Ie) und 10 Mol-% (Ia) zu 90 Mol.% (Ie) und ganz besonders zwischen 100 Mol-% (Ia) zu 0 Mol-% (Ie) und 20 Mol-% (Ia) zu 80 Mol-% (Ie) liegen.

Die hochmolekularen Polycarbonate aus den Diphenolen der Formel (Ia), gegebenenfalls in Kombination mit anderen Diphenolen können nach den bekannten Polycarbonat-Herstellungsverfahren hergestellt werden. Dabei können die verschiedenen Diphenole sowohl statistisch als auch blockweise miteinander verknüpft sein.

Die erfindungsgemäßen Polycarbonate können in an sich bekannter Weise verzweigt sein. Wenn Verzweigung gewünscht wird, kann sie in bekannter Weise durch Einkodensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5-methyl-benzyl)-4-methylphenol,
2-(4-Hydroxyphenyl)-2-(2,4-dihydroxyphenyl)-propan,
Hexa-[4-(4-hydroxyphenyl-isopropyl)-phenyl]-orthoterephthalsäureester,
Tetra-(4-hydroxyphenyl)-methan,
Tetra-[4-(4-hydroxyphenyl-isopropyl)-phenoxy]-methan und
1,4-Bis-[(4'-,4''-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (If) geeignet

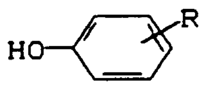 (If)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-gruppe, und besonders bevorzgt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise nach dem Phasengrenzflächenverhalten (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (Ia) in wäßrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z.B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 °C und 40 °C.

Die gegebenenfalls mitverwendeten Verzweiger (bevorzugt 0,05 bis 2,0 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (Ia) und gegebenenfalls anderen Diphenolen (Ie) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate A nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate A können nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate A haben bevorzugt Molekulargewichte $M_w$ (Gewichtsmittel, ermittelt durch Gelchromatographie nach vorheriger Eichung) von mindestens 10.000, besonders bevorzugt von 20.000 bis 300.000 und insbesondere von 20.000 bis 80.000. Sie können linear oder verzweigt sein, sie sind Homopolycarbonate oder Copolycarbonate auf Basis der Diphenole der Formel (Ia).

Durch den Einbau der Diphenole der Formel (Ia) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formele (Ia), in denen m 4 oder 5 ist, und ganz besonders für die Polycarbonate auf Basis der Diphenole (Ib), worin $R^1$ und $R^2$ unabhängig voneinander die für die Formel

(Ia) genannte Bedeutung haben und besonders bevorzugt Wasserstoff sind.

Die besonders bevorzugten Polycarbonate A sind also solche, in denen in den Struktureinheiten der Formel (I) m = 4 oder 5 ist und ganz besonders solche aus Einheiten der Formel (Ig)

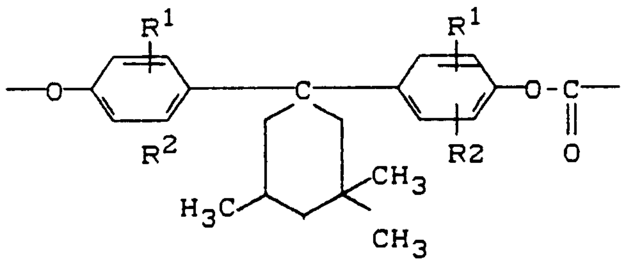

(Ig)

worin

$R^1$ und $R^2$ die für Formel (I) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Komposition mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders von 100 Mol-% bis 20 Mol-%, bezogen jeweils auf die Gesamtmenge von 100 Mol-% an Diphenoleinheiten im Polycarbonat enthalten.

Komponente B

Das kautschukmodifizierte (Co)Polymerisat B. umfaßt ein statistisches (Co)polymerisat aus Monomeren gemäß B.1 und B.2, sowie einen mit dem statistischen (Co)polymerisat aus B.1 und B.2 gepfropften Kautschuk B.3, wobei die Herstellung von B. in bekannter Weise nach einem Masse- oder Lösungs- oder Masse-Suspensions-Polymerisationsverfahren erfolgt, wie z.B. in den US 3 243 481, US 3 509 237, US 3 660 535, 4 221 833 und US 4 239 863 beschrieben.

Beispiele für Monomere B.1 sind Styrol, α-Methylstyrol, p-Methylstyrol, p-Chlorstyrol, Methylmethacrylat, n-Butylacrylat und t-Butylacrylat, Beispiele für Monomere B.2 sind Acrylnitril, Methacrylnitril, Methylmethacrylat, n-Butylacrylat, t-Butylacrylat, Maleinsäureanhydrid und N-Phenyl-Maleinimid.

Bevorzugte Monomere B.1 sind Styrol, α-Methylstyrol und Methylmethacrylat, bevorzugte Monomere B.2 sind Acrylnitril, Maleinsäureanhydrid und Methylmethacrylat.

Besonders bevorzugte Monomere sind B.1 Styrol und B.2 Acrylnitril.

Für die kautschukmodifizierten (Co)Polymerisate B. geeignete Kautschuke B.3 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinyl acetat-Kautschuke.

Bevorzugte Kautschuke B.3 sind Dienkautschuke (z.B. auf Basis Butadien, Isopren etc.) oder Gemische von Dienkautschuke oder Copolymerisate von Dienkautschuken oder deren Gemischen mit weiteren copolymerisierbaren Monomeren (z.B. gemäß B.1 und B.2), mit der Maßgabe, daß die Glasübergangstemperatur der Komponente B.3 unterhalb 0 °C, vorzugsweise unterhalb -20 °C liegt. Besonders bevorzugt wird reiner Polybutadienkautschuk.

Die Komponente B. kann, falls erforderlich und wenn dadurch die Kautschukeigenschaften der Komponente B.3 nicht beeinträchtigt werden, zusätzlich noch geringe Mengen, üblicherweise weniger als 5 Gew.-%, vorzugsweise weniger als 2 Gew.-%, bezogen auf B.3, vernetzend wirkender ethylenisch ungesättigter Monomeren enthalten. Beispiele für solche vernetzend wirkenden Monomere sind Alkylendiol-di(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das kautschukmodifizierte (Co)Polymerisat B. wird erhalten, durch Pfropfpolymerisation eines Gemischs aus 50 bis 99, bevorzugt 60 bis 95 Gew.-Teilen B.1 und 1 bis 50, bevorzugt 5 bis 40 Gew.-Teilen B.2, wobei die Summe der Gew.-Teile aus B.1 und B.2 100 ergeben soll, in Gegenwart von 1 bis 50, vorzugsweise 2 bis 35, besonders bevorzugt 3 bis 25 Gew.-Teilen, bezogen auf 100 Gew.-Teile aus B.1 und

B.2, der Kautschukkomponente B.3, wobei die Pfropfpolymerisation nach einem Masse- oder Lösungs-oder Masse-Suspensions-Polymerisationsverfahren durchgeführt wird.

Wesentlich bei der Herstellung der kautschukmodifizierten (Co)Polymerisate B. ist, daß die Kautschukkomponente B.3 vor der Pfropfpolymerisation im Gemisch der Monomeren B.1 und B.2 und gegebenenfalls anderen Lösungsmitteln in gelöster Form vorliegt. Die Kautschukkomponente B.3 darf also weder so stark vernetzt sein, daß eine Lösung in B.1 und B.2 unmöglich wird, noch darf B.3 zu Beginn der Pfropfpolymerisation bereits in Form diskreter Teilchen vorliegen. Die für die Produkteigenschaften von B. wichtige Teilchenmorphologie und zunehmende Vernetzung von B.3 bildet sich erst im Verlauf der Pfropfpolymerisation aus (siehe hierzu beispielsweise Ullmann, Enzyklopädie der technischen Chemie, Band 19, S. 284 ff., 4. Auflage 1980).

Das statistische Copolymerisat aus B.1 und B.2 liegt üblicherweise im Polymerisat B. zu einem Teil auf den Kautschuk B.3 auf- und eingepfropft vor, wobei dieses Pfropfmischpolymerisat diskrete Teilchen im Polymerisat B. ausbildet. Der Anteil des auf- oder eingepfropften Copolymerisats aus B.1 und B.2 am gesamten Copolymerisat aus B.1 und B.2 - also die Pfropfausbeute (= Gewichtsverhältnis der tätsächlich gepfropften Pfropfmonomeren zu den insgesamt verwendeten Pfropfmonomeren x 100, angegeben in %) - beträgt dabei 2 bis 40 %, vorzugsweise 3 bis 30 %, besonders bevorzugt 4 bis 20 %.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 µm, vorzugsweise von 0,8 bis 2,5 µm.

Die erfindungsgemäßen Formmassen können Zusätze weiterer, mit den Komponenten A und/oder B und/oder der Mischung aus A + B mindestens teilweise verträglichen thermoplastischen Kunststoffe enthalten. Als Zusätze in Frage kommen hier insbesondere thermoplastische aromatische Polycarbonate des Stands der Technik (d.h. solche, die keine bifunktionellen Carbonatstruktureinheiten gemäß Formel (I) enthalten, z.B. Polycarbonat auf Basis von Bisphenol A), aber auch beispielsweise nach anderen als in der Erfindung bevorzugten Verfahren hergestellte Copolymerisate oder Pfropfpolymerisate (z.B. Emulsions-ABS), wobei dann allerdings in Kauf genommen werden muß, daß sich erwünschte Eigenschaften wie Wärmeformbeständigkeit oder Thermostabilität gegebenenfalls graduell verschlechtern.

Weitere mögliche Zusätze zu den Formmassen aus A + B sind Polyalkylenterephthalate wie z.B. Polyethylenterephthalat und Polybutylenterephthalat.

Die erfindungsgemäßen Formmassen können darüber hinaus weitere bekannte Zusätze wie Stabilisatoren, Pigmente, Entformungsmittel, Fließhilfsmittel, Flammschutzmittel, Füll- und Verstärkungsstoffe und Antistatika in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen wie Innenknetern, Extrudern oder Doppelwellenschnecken schmelzcompoundiert oder schmelzextrudiert.

Die erfindungsgemäßen Formmassen können zur Herstellung von Formkörpern jeder Art, z.B. durch Spritzgießen, verwendet werden, Beispiele für Formkörper sind: Gehäuseteile (z.B. für Haushaltsgeräte wie Saftpressen, Kaffeemaschinen, Mixer) Abdeckplatten für das Baugewerbe und Automobilteile. Sie werden außerdem für elektrische Geräte, z.B. für Steckerleisten eingesetzt, weil sie sehr gute elektrische Eigenschaften haben. Formkörper können auch durch Tiefziehen aus vorher hergestellten Platten oder Folien hergestellt worden.

Ein weiterer Grund der Erfindung ist also die Verwendung der beschriebenen Formmassen zur Herstellung von Formkörpern.

## Beispiele

### 1. Eingesetzte Komponenten

Angegebene Teile bedeutet Gewichtsteile.

### Komponente A

A.1

Polycarbonat auf Basis Bisphenol A/1,1-Bis-(4-hydroxyphenyl)-3,3,5-trimethylcyclohexan (Molverhältnis 45 : 55). Die Herstellung kann gemäß folgender Vorschrift erfolgen:
1.436,4 g (6,3 Mol) Bisphenol A (2,2-Bis(4-hydroxyphenyl)propan), 2.387,0 g (7,7 Mol) 1,1-Bis-(4-hydroxyphenyl)-3,3,5-trimethylcyclohexan, 7.476,0 g (84 Mol) 45 %ige NaOH und 33,7 l Wasser werden in einer Inertgas-Atmosphäre unter Rühren gelöst. Dann fügt man eine Lösung von 36,9 g (0,392 Mol) Phenol in 11 l Methylenchlorid und 13 l Chlorbenzol zu. In die gut gerührte Lösung wurden bei pH 13 - 14 und 21 - 25 °C 2.772 g (28 Mol) Phosgen eingeleitet. Danach werden 14 ml Ethylpiperidin zugegeben und noch 45 Min. gerührt. Die bisphenolatfreie wäßrige Phase wird abgetrennt, die organische Phase nach Ansäuern mit Phosphorsäure mit Wasser elektrolytfrei gewaschen und vom Lösungsmittel befreit. Das Polycarbonat zeigte eine rel. Lösungsviskosität von 1,30. Die Glastemperatur des Polymers wurde zu 206 °C bestimmt (DSC).

A.2

Polycarbonat auf Basis Bisphenol A/1,1-Bis-(4-hydroxyphenyl)-3,3,5-trimethylcyclohexan (Molverhältnis 65 : 35). Die Herstellung erfolgt wie unter A.1 beschrieben. Das Polycarbonat zeigte eine rel. Lösungsviskosität von 1,30.

A.3

Polycarbonat auf Basis Bisphenol A/1,1-Bis-(4-hydroxyphenyl)-3,3,5-trimethylcyclohexan (Molverhältnis 80 : 20). Die Herstellung erfolgt wie unter A.1 beschrieben. Das Polycarbonat zeigte eine rel. Lösungsviskosität von 1,30.

A.4

Polycarbonat auf Basis Bisphenol A mit einer relativen Lösungsviskosität $\eta_{rel}$ von 1,26 bis 1,28, gemessen in Methylenchlorid bei 25 °C und einer Konzentration von 0,5 g/ 100 ml.

Komponente B

Masse-ABS-Polymerisat der Fa. Dow (Handelsname Magnum 541; Acrylnitril: Butadien : Styrol = 25,1 : 9,2 : 65,7; Bestimmung durch FTIR-Spektroskopie).

2. Herstellung und Prüfung der erfindungsgemäßen Formmassen

Die Komponenten A und B wurden auf einem Doppelwellenextruder (ZSK 53 der Fa. Werner & Pfleiderer) bei Temperaturen zwischen 280 und 300 °C aufgeschmolzen und homogenisiert.

Von den Formmassen wurden auf einer Spritzgußmaschine Stäbe der Abmessung 80 x 10 x 4 mm (Verarbeitungstemperatur 290 °C) hergestellt, an denen die Kerbschlagzähigkeit bei Raumtemperatur (Methode ISO 180 1A) und die Wärmeformbeständigkeit nach Vicat VST B 120 (DIN 53 460) gemessen wurde.

Die bei 290 °C hergestellten Prüfkörper weisen eine hervorragende Oberflächenbeschaffenheit bei heller Eigenfarbe auf.

Zusammensetzung und technologische Eigenschaften erfindungsgemäßer Formmassen finden sich in nachstehender Tabelle.

Zusammensetzung und Eigenschaften der Formmassen

| Beispiel | Komponenten [Gew.-Teile] | | | | | Kerbschlagzähigkeit ISO 180 1A R.T. [kJ/$m^2$] | Vicat VST B 120 DIN 53 460 [°C] |
|---|---|---|---|---|---|---|---|
| | A.1 | A.2 | A.3 | A.4 | B | | |
| 1 | 60 | | | | 40 | 13,9 | 134 |
| 2 | | 60 | | | 40 | 23,0 | 125 |
| 3 | | | 60 | | 40 | 31,3 | 124 |
| 4 | 10 | | | 50 | 40 | 22,4 | 121 |

**Patentansprüche**

**Patentansprüche für folgende Vertragsstaaten : BE, DE, FR, GB, IT, NL**

1. Thermoplastische Formmassen, enthaltend

A. 1 bis 99 Gew.-Teile eines oder mehrerer thermoplastischer aromatischer Polycarbonate mit $M_w$ -(Gewichtsmittelmolekulargewichten) von mindestens 10.000, die bifunktionelle Carbonatstruktureinheiten der Formel (I) enthalten,

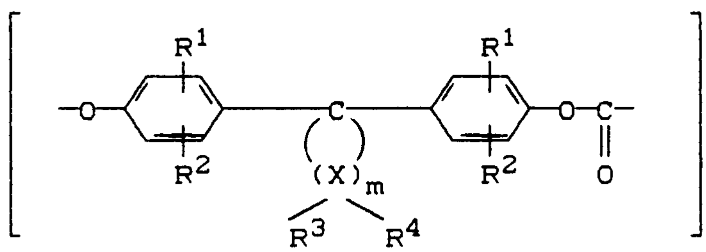

(I)

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl, und $C_7$-$C_{12}$-Aralkyl, |
| m | eine ganze Zahl von 4 bis 7, |
| $R^3$ und $R^4$ | für jedes X individuell wählbar, unabhängig voneinander Wasserstoff oder $C_1$-$C_6$-Alkyl |

und

X Kohlenstoff bedeuten,
mit der Maßgabe, daß an mindestens einem Atom X $R^3$ und $R^4$ gleichzeitig Alkyl bedeuten, und

B. 1 bis 99 Gew.-Teile eines (Co)Polymerisats, das erhalten wird durch Pfropfpolymerisation einer Mischung aus

B.1 50 bis 99 Gew.-Teilen Styrol, α-Methylstyrol, kernsubstituierten Styrolen, $C_1$-$C_8$-Alkyl-methacrylaten, $C_1$-$C_8$-Alkylacrylaten oder Mischungen daraus, und

B.2 50 bis 1 Gew.-Teilen Acrylnitril, Methacrylnitril, $C_1$-$C_8$-Alkylmethacrylaten, $C_1$-$C_8$-Alkylacrylaten, Maleinsäureanhydrid, N-substituierten Maleinimiden oder Mischungen daraus, wobei die Summe aus B.1 und B.2 100 Gew.-Teile ergeben soll, in Gegenwart von

B.3 1 bis 50 Gew.-Teilen, bezogen auf 100 Gew.-Teile B.1 und B.2, eines mit B.1 und B.2 copolymerisierbaren Kautschuks mit einer Glasübergangstemperatur $< 0\,°C$.

wobei das (Co)Polymerisat B. nach einem Masse- oder Lösungs- oder Masse-Suspensions-Polymerisationsverfahren hergestellt ist und wobei die Kautschukkomponente B.3 vor der Pfropfpolymerisation im Gemisch der Monomeren B.1 und B.2 und gegebenenfalls anderen Lösungsmitteln in gelöster Form vorliegt und der Anteil des auf- oder eingepfropften Copolymerisats aus B.1 und B.2 am gesamten Copolymerisat aus B.1 und B.2 2 bis 40 % beträgt, und wobei die thermoplastischen Formmassen frei von Copolymerisaten aus cyclischen Carbonaten und cyclischen Estern (Lactonen) sind.

2. Thermoplastische Formmassen gemäß Anspruch 1, dadurch gekennzeichnet, daß sie 25 bis 98 Gew.-Teile der Komponente A und 2 bis 75 Gew.-Teile der Komponente B enthalten.

3. Thermoplastische Formmassen gemäß Anspruch 1, dadurch gekennzeichnet, daS sie 40 bis 97 Gew.-Teile der Komponente A und 3 bis 60 Gew.-Teile der Komponente B enthalten.

4. Thermoplastische Formmassen gemäß Ansprüchen 1 bis 3, dadurch gekennzeichnet, daß das Gewichtsmittelmolekulargewicht $M_w$ der Komponente A 20.000 bis 300.000 beträgt.

5. Thermoplastische Formmassen gemäß Ansprüchen 1 bis 4, dadurch gekennzeichnet, daß die Komponente A ein Polycarbonat oder Copolycarbonat auf Basis von 1,1-Bis-(4-hydroxyphenyl)-3,3,5-trimethylcyclohexan ist.

6. Thermoplastische Formmassen gemäß Ansprüchen 1 bis 5, dadurch gekennzeichnet, daß die Komponente B ein Polymerisat aus 60 bis 95 Gew.-Teilen B.1, 5 bis 40 Gew.-Teilen B.2 und, bezogen auf 100 Gew.-Teile B.1 und B.2, 2 bis 35 Gew.-Teilen B.3 ist.

7. Thermoplastische Formmassen gemäß Ansprüchen 1 bis 6, dadurch gekennzeichnet, daß die Komponente B ein Polymerisat aus B.1 Styrol und B.2 Acrylnitril und B.3 Butadien ist, das durch ein Masse- oder Lösungs-oder Masse-Suspensions-Polymerisationsverfahren hergestellt wurde.

8. Thermoplastische Formmassen gemäß Ansprüchen 1 bis 7, dadurch gekennzeichnet, daß sie mindestens einen Zusatz aus der Gruppe der Stabilisatoren, Pigmente, Entformungsmittel, Fließhilfsmittel, Flammschutzmittel Füll- und Verstärkungsstoffe und Antistatika enthalten.

9. Verwendung der Formmassen der Ansprüche 1 bis 8 zur Herstellung von Formkörpern.

**Patentansprüche für folgenden Vertragsstaat : ES**

1. Verfahren zur Herstellung von thermoplastischen Formmassen, enthaltend

A. 1 bis 99 Gew.-Teile eines oder mehrerer thermoplastischer aromatischer Polycarbonate mit $M_w$ - (Gewichtsmittelmolekulargewichten) von mindestens 10.000, die bifunktionelle Carbonatstruktureinheiten der Formel (I) enthalten,

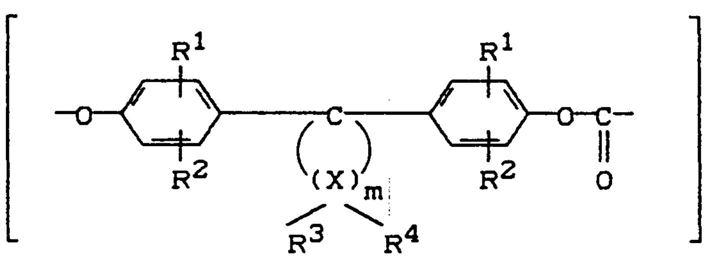

(I)

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl, und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X $R^3$ und $R^4$ gleichzeitig Alkyl bedeuten, und

B. 1 bis 99 Gew.-Teile eines (Co)Polymerisats, das erhalten wird durch Pfropfpolymerisation einer Mischung aus

B.1 50 bis 99 Gew.-Teilen Styrol, $\alpha$-Methylstyrol, kernsubstituierten Styrolen, $C_1$-$C_8$-Alkyl-methacrylaten, $C_1$-$C_8$-Alkylacrylaten oder Mischungen daraus, und

B.2 50 bis 1 Gew.-Teilen Acrylnitril, Methacrylnitril, $C_1$-$C_8$-Alkylmethacrylaten, $C_1$-$C_8$-Alkylacrylaten, Maleinsäureanhydrid, N-substituierten Maleinimiden oder Mischungen daraus, wobei die Summe aus B.1 und B.2 100 Gew.-Teile ergeben soll, in Gegenwart von

B.3 1 bis 50 Gew.-Teilen, bezogen auf 100 Gew.-Teile B.1 und B.2, eines mit B.1 und B.2 copolymerisierbaren Kautschuks mit einer Glasübergangstemperatur $< 0\,^\circ C$.

wobei das (Co)Polymerisat B. nach einem Masse-oder Lösungs- oder Masse-Suspensions-Polymerisationsverfahren hergestellt ist und wobei die Kautschukkomponente B.2 vor der Pfropfpolymerisation im Gemisch der Monomeren B.1 und B.2 und gfs. anderen Lösungsmitteln in gelöster Form vorliegt und der Anteil des auf- oder eingepfropften Copolymerisats aus B.1 und B.2 am gesamten Copolymerisat aus B.1 und B.2 2 bis 40 Gew.% beträgt,

dadurch gekennzeichnet, daß man die Bestandteile in bekannter Weise vermischt und bei erhöhten Temperaturen in üblichen Vorrichtungen schmelzcompoundiert oder schmelzextrudiert.

2. Verfahren gemäß Anspruch 1, dadurch gekennzeichnet, daß mindestens ein Zusatz aus der Gruppe der Stabilisatoren, Pigmente, Entformungsmittel, Fließhilfsmittel, Flammschutzmittel, Füll- und Verstärkungsstoffe und Antistatika einbezogen ist.

## Claims

**Claims for the following Contracting States : BE, DE, FR, GB, IT, NL**

1. Thermoplastic moulding compositions containing
A. from 1 to 99 parts by weight of one or more thermoplastic aromatic polycarbonates having weight-average molecular weights $M_w$ of at least 10 000 and containing bifunctional units with a carbonate structure of formula (I),

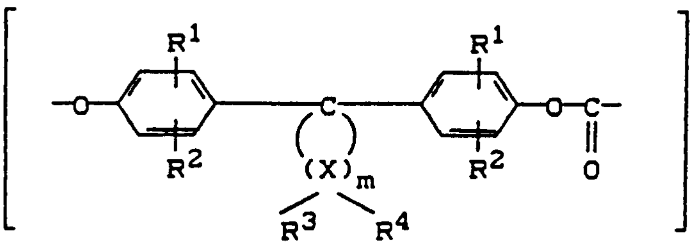

(I)

where
$R^1$ and $R^2$ signify, independently of one another, hydrogen, halogen, $C_1$ to $C_8$ alkyl, $C_5$ to $C_6$ cycloalkyl, $C_6$ - $C_{10}$ aryl and $C_7$ - $C_{12}$ aralkyl,
m signifies a whole number from 4 to 7,
$R^3$ and $R^4$ signify, with the ability to be chosen individually for each X and independently of one another, hydrogen or $C_1$ - $C_6$ alkyl
and
X signifies carbon
on condition that $R^3$ and $R^4$ simultaneously signify alkyl on at least one X atom, and
B. from 1 to 99 parts by weight of a (co)polymer which is obtained by graft polymerisation of a mixture of
B.1 from 50 to 99 parts by weight of styrene, $\alpha$-methylstyrene, styrenes substituted in the ring, $C_1$ - $C_8$ alkyl methacrylates, $C_1$ - $C_8$ alkyl acrylates or mixtures thereof, and
B.2 from 50 to 1 parts by weight of acrylonitrile, methacrylonitrile, $C_1$ - $C_8$ alkyl methacrylates, $C_1$ - $C_8$ alkyl acrylates, maleic acid anhydride, N-substituted maleimides or mixtures thereof, where the sum of B.1 and B.2 is to produce 100 parts by weight, in the presence of
B.3 from 1 to 50 parts by weight, referred to 100 parts by weight of B.1 and B.2, of a rubber copolymerisable with B.1 and B.2 and having a glass transition temperature $< 0°$ C,
wherein the (co)polymer B. is manufactured by a mass or solution or mass-suspension polymerisation method and wherein the rubber component B.3 is present in dissolved form prior to the graft polymerisation in a mixture of the monomers B.1 and B.2 and optionally other solvents and the proportion of the copolymer grafted on or in, consisting of B.1 and B.2, in the total copolymer, consisting of B.1 and B.2, is 2 to 40%, and wherein the thermoplastic moulding compositions are free from copolymers consisting of cyclic carbonates and cyclic esters (lactones).

2. Thermoplastic moulding compositions according to claim 1, characterised in that they contain from 25 to 98 parts by weight of component A and from 2 to 75 parts by weight of component B.

3. Thermoplastic moulding compositions according to claim 1, characterised in that they contain from 40 to 97 parts by weight of component A and from 3 to 60 parts by weight of component B.

4. Thermoplastic moulding compositions according to claims 1 to 3, characterised in that the weight-average molecular weight $M_w$ of component A is from 20 000 to 300 000.

5. Thermoplastic moulding compositions according to claims 1 to 4, characterised in that component A is a polycarbonate or copolycarbonate based on 1,1-bis-(4-hydroxyphenyl)-3,3,5-trimethyl cyclohexane.

**6.** Thermoplastic moulding compositions according to claims 1 to 5, characterised in that component B is a polymer consisting of 60 to 95 parts by weight of B.1, 5 to 40 parts by weight of B.2 and, referred to 100 parts by weight of B.1 and B.2, 2 to 35 parts by weight of B.3.

**7.** Thermoplastic moulding compositions according to claims 1 to 6, characterised in that component B is a polymer consisting of B.1 styrene and B.2 acrylonitrile and B.3 butadiene, which has been manufactured by a mass or solution or mass-suspension polymerisation method.

**8.** Thermoplastic moulding compositions according to claims 1 to 7, characterised in that they contain at least one additive from the group of the stabilizers, pigments, mould release agents, fluidizing auxiliaries, flame retardants, fillers and reinforcing agents and antistatic agents.

**9.** Use of the moulding compositions of claims 1 to 8 for the manufacture of moulded articles.

**Claims for the following Contracting State: ES**

**1.** Process for the manufacture of thermoplastic moulding compositions containing

A. from 1 to 99 parts by weight of one or more thermoplastic aromatic polycarbonates having weight-average molecular weights $M_w$ of at least 10 000 and containing bifunctional units with a carbonate structure of formula (I),

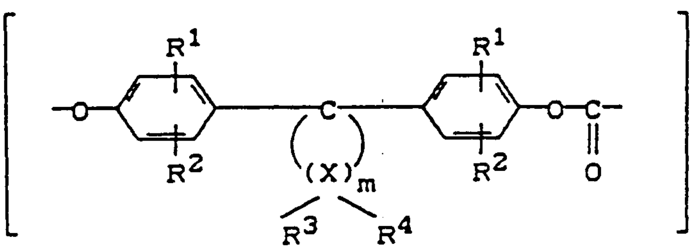

(I)

where

$R^1$ and $R^2$ signify, independently of one another, hydrogen, halogen, $C_1$ to $C_8$ alkyl, $C_5$ to $C_6$ cycloalkyl, $C_6$ - $C_{10}$ aryl and $C_7$ - $C_{12}$ aralkyl,

m signifies a whole number from 4 to 7,

$R^3$ and $R^4$ signify, with the ability to be chosen individually for each X and independently of one another, hydrogen or $C_1$ - $C_6$ alkyl

and

X signifies carbon

on condition that $R^3$ and $R^4$ simultaneously signify alkyl on at least one X atom, and

B. from 1 to 99 parts by weight of a (co)polymer which is obtained by graft polymerisation of a mixture of

B.1 from 50 to 99 parts by weight of styrene, $\alpha$-methylstyrene, styrenes substituted in the ring, $C_1$ - $C_8$ alkyl methacrylates, $C_1$ - $C_8$ alkyl acrylates or mixtures thereof, and

B.2 from 50 to 1 parts by weight of acrylonitrile, methacrylonitrile, $C_1$ - $C_8$ alkyl methacrylates, $C_1$ - $C_8$ alkyl acrylates, maleic acid anhydride, N-substituted maleimides or mixtures thereof, where the sum of B.1 and B.2 is to produce 100 parts by weight, in the presence of

B.3 from 1 to 50 parts by weight, referred to 100 parts by weight of B.1 and B.2, of a rubber copolymerisable with B.1 and B.2 and having a glass transition temperature $< 0°$ C,

wherein the (co)polymer B. is manufactured by a mass or solution or mass-suspension polymerisation method and wherein the rubber component B.2 is present in dissolved form prior to the graft polymerisation in a mixture of the monomers B.1 and B.2 and optionally other solvents and the proportion of the copolymer grafted on or in, consisting of B.1 and B.2, in the total copolymer, consisting of B.1 and B.2, is 2 to 40%,

characterised in that the components are mixed in known manner and are melt-compounded or melt-extruded at elevated temperatures in conventional devices.

2. Process according to claim 1, characterised in that at least one additive from the group of the stabilizers, pigments, mould release agents, fluidizing auxiliaries, flame retardants, fillers and reinforcing agents and antistatic agents is included.

## Revendications

**Revendications pour les Etats contractants suivants : BE, DE, FR, GB, IT, NL**

1. Matières à mouler thermoplastiques contenant

A. de 1 à 99 parties en poids d'un ou de plusieurs polycarbonates aromatiques thermoplastiques avec des $M_w$ (poids moléculaires moyens en poids) d'au moins 10.000, qui contiennent des unités de structure de carbonate bifonctionnelles de formule (I)

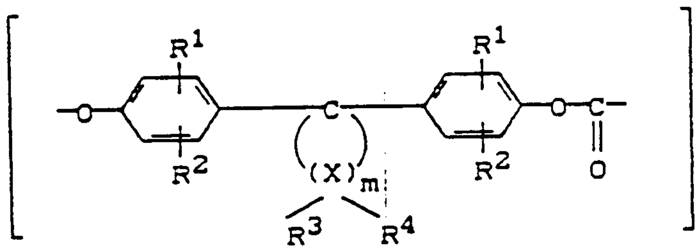

(I)

dans laquelle

$R^1$ et $R^2$ représentent, indépendamment l'un de l'autre, un atome d'hydrogène, un atome d'halogène, un groupe alkyle en $C_1$-$C_8$, un groupe cycloalkyle en $C_5$-$C_6$, un groupe aryle en $C_6$-$C_{10}$ et un groupe aralkyle en $C_7$-$C_{12}$;

m représente un entier de 4 à 7,

$R^3$ et $R^4$, qui peuvent être sélectionnés individuellement pour chaque X, représentent, indépendamment l'un de l'autre, un atome d'hydrogène ou un groupe alkyle en $C_1$-$C_6$,

et

X représente un atome de carbone,

avec cette mesure que, sur au moins un atome X, $R^3$ et $R^4$ représentent simultanément un groupe alkyle, et

B. de 1 à 99 parties en poids d'un (co)polymère que l'on obtient par une polymérisation par greffage d'un mélange de

B.1 50 à 99 parties en poids de styrène, d'$\alpha$-méthylstyrène, de styrènes substitués au noyau, de méthacrylates d'alkyle en $C_1$-$C_8$, d'acrylates d'alkyle en $C_1$-$C_8$ ou de mélanges de ces composés, et

B.2 50 à 1 parties en poids d'acrylonitrile, de méthacrylonitrile, de méthacrylates d'alkyle en $C_1$-$C_8$, d'acrylates d'alkyle en $C_1$-$C_8$, d'anhydride maléique, de maléimides N-substitués ou encore de mélanges de ces composés, la somme de B.1 et de B.2 devant être égale à 100 parties en poids, en présence de

B.3 1 à 50 parties en poids, rapportées à 100 parties en poids de B.1 et de B.2, d'un caoutchouc copolymérisable avec B.1 et B.2, présentant une température de transition vitreuse $< 0\,°C$,

dans lesquelles le (co)polymère B est préparé conformément à un procédé de polymérisation en masse ou en solution ou encore en suspension en masse et dans lequel le composant de caoutchouc B.3 est présent avant la polymérisation par greffage sous forme dissoute dans le mélange des monomères B.1 et B.2 et éventuellement d'autres solvants, et la fraction du copolymère de B.1 et B.2 ajouté ou incorporé par greffage représente de 2 à 40% du copolymère global de B.1 et B.2, et dans lesquelles les matières à mouler thermoplastiques sont exemptes de carbonates cycliques et d'esters cycliques (lactones).

2. Matières à mouler thermoplastiques selon la revendication 1, caractérisées en ce qu'elles contiennent de 25 à 98 parties en poids du composant A et de 2 à 75 parties en poids du composant B.

3. Matières à mouler thermoplastiques selon la revendication 1, caractérisées en ce qu'elles contiennent de 40 à 97 parties en poids du composant A et de 3 à 60 parties en poids du composant B.

4. Matières à mouler thermoplastiques selon les revendications 1 à 3, caractérisées en ce que le poids moléculaire moyen en poids $M_w$ du composant A s'élève de 20.000 à 300.000.

5. Matières à mouler thermoplastiques selon les revendications 1 à 4, caractérisées en ce que le composant A est un polycarbonate ou un copolycarbonate à base de 1,1-bis-(4-hydroxyphényl)-3,3,5-triméthylcyclohexane.

6. Matières à mouler thermoplastiques selon les revendications 1 à 5, caractérisées en ce que le composant B est un polymère constitué par 60 à 95 parties en poids de B.1, 5 à 40 parties en poids de B.2 et, rapportées à 100 parties en poids de B.1 et de B.2, 2 à 35 parties en poids de B.3.

7. Matières à mouler thermoplastiques selon les revendications 1 à 6, caractérisées en ce que le composant B est un polymère de styrène B.1 et d'acrylonitrile B.2 et de butadiène B.3, qui a été préparé par un procédé de polymérisation en masse ou en solution ou encore en suspension en masse.

8. Matières à mouler thermoplastiques selon les revendications 1 à 7, caractérisées en ce qu'elles contiennent au moins un additif choisi parmi le groupe comprenant des stabilisateurs, des pigments, des agents de démoulage, des fluidifiants, des agents ignifuges, des matières de remplissage et de renforcement et des agents antistatiques.

9. Utilisation des matières à mouler selon les revendications 1 à 8, pour préparer des corps moulés.

**Revendications pour l'Etat contractant suivant : ES**

1. Procédé pour la préparation de matières à mouler thermoplastiques contenant
   A. de 1 à 99 parties en poids d'un ou de plusieurs polycarbonates aromatiques thermoplastiques avec des $M_w$ (poids moléculaires moyens en poids) d'au moins 10.000, qui contiennent des unités de structure de carbonate bifonctionnelles de formule (I)

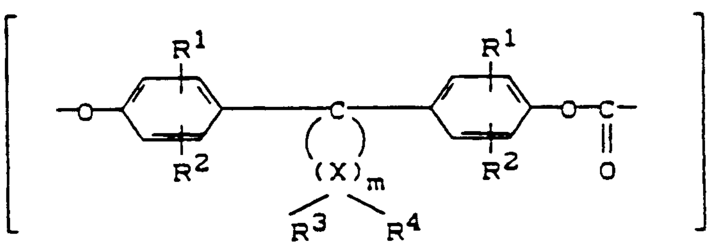
(I)

dans laquelle

$R^1$ et $R^2$ représentent, indépendamment l'un de l'autre, un atome d'hydrogène, un atome d'halogène, un groupe alkyle en $C_1$-$C_8$, un groupe cycloalkyle en $C_5$-$C_6$, un groupe aryle en $C_6$-$C_{10}$ et un groupe aralkyle en $C_7$-$C_{12}$;

m représente un entier de 4 à 7,

$R^3$ et $R^4$, qui peuvent être sélectionnés individuellement pour chaque X, représentent, indépendamment l'un de l'autre, un atome d'hydrogène ou un groupe alkyle en $C_1$-$C_6$,

et

X représente un atome de carbone,

avec cette mesure que, sur au moins un atome X, $R^3$ et $R^4$ représentent simultanément un groupe alkyle, et

B. de 1 à 99 parties en poids d'un (co)polymère que l'on obtient par une polymérisation par greffage d'un mélange de

B.1 50 à 99 parties en poids de styrène, d'α-méthylstyrène, de styrènes substitués au noyau, de méthacrylates d'alkyle en $C_1$-$C_8$, d'acrylates d'alkyle en $C_1$-$C_8$ ou de mélanges de ces composés, et

B.2 50 à 1 parties en poids d'acrylonitrile, de méthacrylonitrile, de méthacrylates d'alkyle en $C_1$-$C_8$, d'acrylates d'alkyle en $C_1$-$C_8$, d'anhydride maléique, de maléimides N-substitués ou encore de mélanges de ces composés, la somme de B.1 et de B.2 devant être égale à 100 parties en poids,

en présence de

B.3 1 à 50 parties en poids, rapportées à 100 parties en poids de B.1 et de B.2, d'un caoutchouc copolymérisable avec B.1 et B.2, présentant une température de transition vitreuse < 0 °C,

dans lequel le (co)polymère B est préparé conformément à un procédé de polymérisation en masse ou en solution ou encore en suspension en masse et dans lequel le composant de caoutchouc B.3 est présent avant la polymérisation par greffage sous forme dissoute dans le mélange des monomères B.1 et B.2 et éventuellement d'autres solvants, et la fraction du copolymère de B.1 et B.2 ajouté ou incorporé par greffage représente de 2 à 40% du copolymère global de B.1 et B.2,
caractérisé en ce qu'on mélange les constituants d'une manière connue et on les formule en fusion ou encore on les extrude en fusion à des températures élevées dans des dispositifs habituels.

**2.** Procédé selon la revendication 1, caractérisé en ce qu'on incorpore au moins un additif choisi parmi le groupe comprenant des stabilisateurs, des pigments, des agents de démoulage, des fluidifiants, des agents ignifuges, des matières de remplissage et de renforcement et des agents antistatiques.